# EUROPÄISCHE PATENTSCHRIFT

(11) **EP 1 445 187 B1**
(45) Veröffentlichungstag und Bekanntmachung des Hinweises auf die Patenterteilung: **11.03.2009**
(21) Anmeldenummer: 04010917.5
(22) Anmeldetag: 28.01.1999
(51) Int. Cl.: B62M 25/04, B62K 23/06

(54) **Schalter für Fahrradgetriebe**
Control device for bicycle derailleur
Dispositif de commande pour dérailleur de bicyclette

(30) Priorität: 04.03.1998 DE 19809113
(43) Veröffentlichungstag der Anmeldung: 11.08.2004
(62) Teilanmeldung aus: 99101830.0
(73) Patentinhaber: SRAM Deutschland GmbH, 97424 Schweinfurt (DE)
(72) Erfinder: Assel, Martin, Dipl.-Ing., 91315 Höchstadt an der Aisch (DE); Arbeiter, Markus, Dipl.-Ing., 50670 Köln (DE)
(74) Vertreter: Prechtel, Jörg

(56) Entgegenhaltungen:
- EP-A1- 0 615 896
- EP-A2- 0 352 733

## Beschreibung

Die Erfindung betrifft eine Schalterhebelanordnung eines Schalters für Fahrradgetriebe gemäß dem Oberbegriff des Anspruchs 1.

Mit der EP 0 352 733 B1 ist eine oberbegriffsgemäße Schalterhebelanordnung bekannt geworden, die zu einem Triggerschalter gehört, bei welchem sich das Aufwickeln des Zugseils gegen die Feder des Fahrradgetriebes und die Freigabe des Zugseils durch einen Rastmechanismus durch die Betätigung eines einzigen. Hebels bewerkstelligen lässt. Vorgesehen ist ein Betätigungshebel, der zum Spannen des Zugseils um eine Mittelachse drehbar gelagert ist, wobei von Gangstufe zu Gangstufe eine Rasteinrichtung pro Schaltstufe durchfahren wird, die mit einem Freigabehebel derart entlastet werden kann, dass der Betätigungshebel vom Zugseil in die nachfolgende Raststufe für die nachfolgende Gangstufe zurückgezogen wird. Der Freigabehebel ist integraler Bestandteil des Betätigungshebels, wobei der Freigabehebel in einer Ebene bedient wird, die senkrecht zu der Bedienungsebene des Betätigungshebels steht. Die Drehachse für den Freigabehebel ist in den Betätigungshebel integriert und läuft beim Schalten der einzelnen Gangstufen um die Mittelachse des Betätigungshebels mit um, so dass in den Extremstellungen des Schalters zwischen den Gangstufen der Berggänge und den Gangstufen der Schnellgänge jeweils Positionen für den Betätigungshebel erreicht werden, die in einem für die Ergonomie des Schaltens ungünstigen Bereich -angesiedelt sind. Zum Zurückschalten ist der Freigabehebel in der jeweiligen momentanen Drehstellung des Betätigungshebels aus seiner Ruhestellung nach unten in seine Freigabestellung bewegbar.

Demgegenüber ist es eine Aufgabe, eine konstruktiv einfach realisierbare und unabhängig von einer momentanen Gangstufe zumindest betreffend den Freigabehebel ergonomisch betätigbare Schalterhebelanordnung bereitzustellen.

Zur Lösung dieser Aufgabe wird die Schalterhebelanordnung gemäß Anspruch 1 bereitgestellt. Vorteilhafte Weiterbildungen ergeben sich aus den Unteransprüchen.

Die vorgeschlagene Erfindung weist gegenüber der angesprochenen vorbekannten Lösung eine Trennung von Betätigungshebel und Freigabehebel auf, mit dem Ziel, die Schaltungen unabhängig von der Gangstufe immer an der gleichen Position des Betätigungshebels sowie des Freigabehebels durchzuführen. Auf diese Weise ist es auch möglich, insbesondere den Freigabehebel mit ergonomischer Ausgestaltung des gehäusefemen Endes zu versehen, wodurch es möglich wird, insbesondere auch dann, wenn der Fahrer den dem Schalter benachbarten Bremshebel betätigt, auch noch den Freigabehebel zur gleichen Zeit durch Antippen des gehäusefemen Endes des Freigabehebels mit einem für den Bremsvorgang nicht herangezogenen Finger zu betätigen.

Auf Basis der erfindungsgemäßen Schalterhebelanordnung wird ein Schalter zur Betätigung eines Fahrradgetriebes bereitgestellt, dessen Betätigungselemente, insbesondere ein Betätigungshebel sowie ein Freigabehebel, für alle Gangstufen in jeweils der ergonomisch optimalen Position stehen und sich nach der jeweiligen Betätigung in diese zurückbewegen. Zur Erläuterung der Erfindung werden im Folgenden entsprechende Ausführungsbeispiele beschrieben.

Es zeigen:

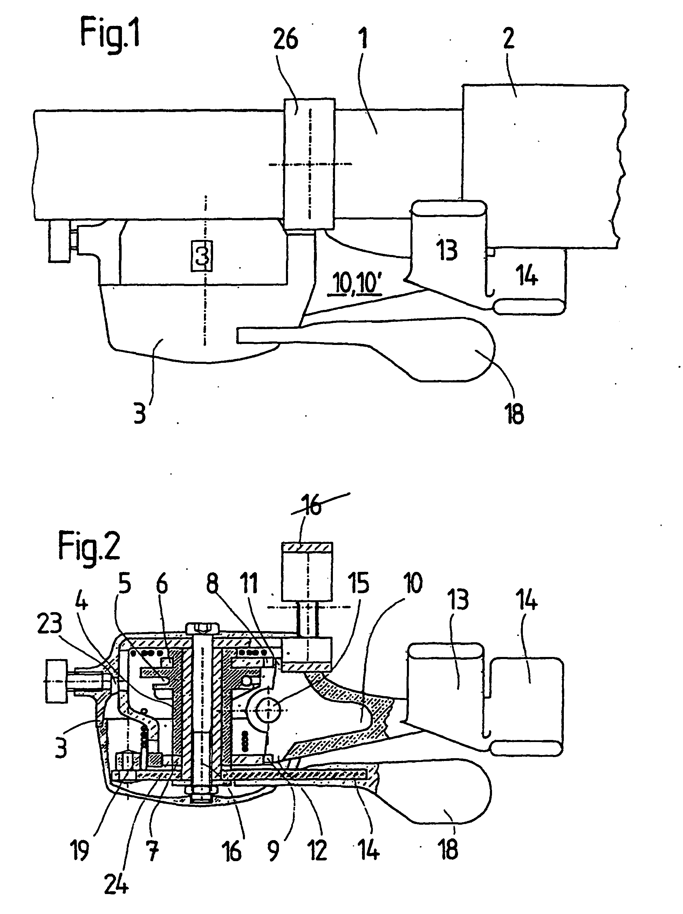

- Figur 1: einen Schalter an einem Lenker für ein Fahrrad mit einem Gehäuse, einem Betätigungshebel und einem Freigabehebel;
- Figur 2: den Schalter mit einem Betätigungsteil um eine Mittelachse mit einer Aufwickelnut für ein Zugseil und mit einer ersten Rastscheibe sowie einer zweiten Rastscheibe im Schnitt;
- Figur 3: den Schalter mit einer ersten Grifftaste und einer zweiten Grifftaste, die mit dem Freigabehebel am gehäusefernen Ende verbunden sind;
- Figur 4: den Freigabehebel mit einer ersten Rastnase und einer zweiten Rastnase für den Eingriff in ein erstes und ein zweites Rastzahnsegment der ersten und zweiten Rastscheibe;
- Figur 5: den Freigabehebel mit einer Halteklinke mit einer Rastnase zum Zusammenwirken mit dem zweiten Rastzahnsegment des Betätigungsteils;
- Figur 6: den Betätigungshebel mit einer gehäuseseitig aussteuerbaren Klinke zum Zusammenwirken mit einer Verzahnung an der zweiten Rastscheibe.

Wird mit 1 der Lenker eines Fahrrades bezeichnet, so ist auf diesem ein Griffteil 2 als Platz für die Hand des Fahrradfahrers angeordnet. Ein Schalter 3 ist mittels einer Schelle 26 an dem Lenker befestigt, wobei das Gehäuse 3 im wesentlichen unterhalb des Lenkers 1 angeordnet ist. Im Inneren des Gehäuses 3 ist eine Mittelachse 16 angeordnet, um die sich ein Betätigungsteil 4 drehen kann, an welchem eine Aufwickelnut 5 für ein Zugseil angebracht ist, welches mit einem Fahrradgetriebe verbunden ist und in das Gehäuse 3 über eine Öffnung 23 einlaufen kann. Am oberen Ende des Betätigungsteils 4 ist eine erste Rastscheibe 6 mit einem ersten Rastzahnsegment 8 angeordnet, während am unteren lenkerfernen Ende des Betätigungsteils 4 eine zweite Rastscheibe 7 mit einem zweiten Rastzahnsegment 9 und einer Verzahnung 24 angeordnet ist. Um die Mittelachse 16 ebenfalls drehbar angeordnet ist ein Betätigungshebel 17 mit einem Griffteil 18, wobei an dem Betätigungshebel 17 eine Klinke 19 drehbar angeordnet und gegen die Verzahnung 24 angefedert ist.

In einer gehäusefesten Drehachse 15 ist ein Freigabehebel 10 schwenkbar angeordnet und weist an seinem dem Betätigungsteil 4 zugewandten Ende eine erste Rastnase 11 und eine zweite Rastnase 12 auf, wobei die erste Rastnase 11 mit dem ersten Rastzahnsegment 8 und die zweite Rastnase 12 mit dem zweiten Rastzahnsegment 9 zusammenwirken. Die Drehachse 15 ist im wesentlichen senkrecht zu der Mittelachse 16 angeordnet, wobei der Abstand der Drehachse 15 von der Mittelachse 16 in etwa dem Radius der Rastzahnsegmente 8 und 9 entspricht. Ferner ist die Position der Drehachse 15 durch einen im wesentlichen gleichen Abstand vom ersten Rastzahnsegment 8 und vom zweiten Rastzahnsegment 9 definiert. Der Freigabehebel 10 ist durch eine hier nicht näher dargestellte Feder in der Weise vorgespannt, daß die zweite Rastnase 12 zum Eingriff mit dem zweiten Rastzahnsegment 9 kommt. In dieser Position liegt der Freigabehebel 10 an einem Anschlag des Gehäuses 3 an.

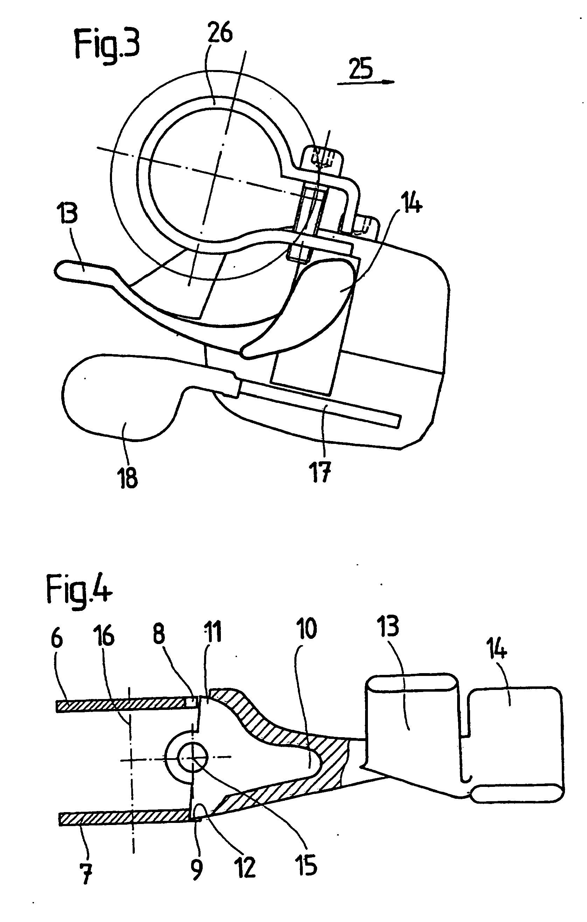

Das gehäuseferne Ende des Freigabehebels 10 mündet in einer ersten Grifftaste 13 und einer zweiten Grifftaste 14, wobei gemäß Fig. 3 die erste Grifftaste 13 in einer Fahrtrichtung 25 gesehen dem Lenker 1 nacheilend und die zweite Grifftaste 14 in Fahrtrichtung 25 voreilend angeordnet sind. In Ruhestellung des Freigabehebels 10 lassen sich die Grifftasten 13 und 14 gemeinsam nach oben bis maximal zum Anschlag an den Griffteil 2 des Lenkers 1 bewegen, wobei die zweite Rastnase 12 des Freigabehebels 10 außer Eingriff mit dem zweiten Rastzahnsegment 9 kommt, während die erste Rastnase 11 des Freigabehebels 10 mit dem ersten Rastzahnsegment 8 in Eingriff kommt.

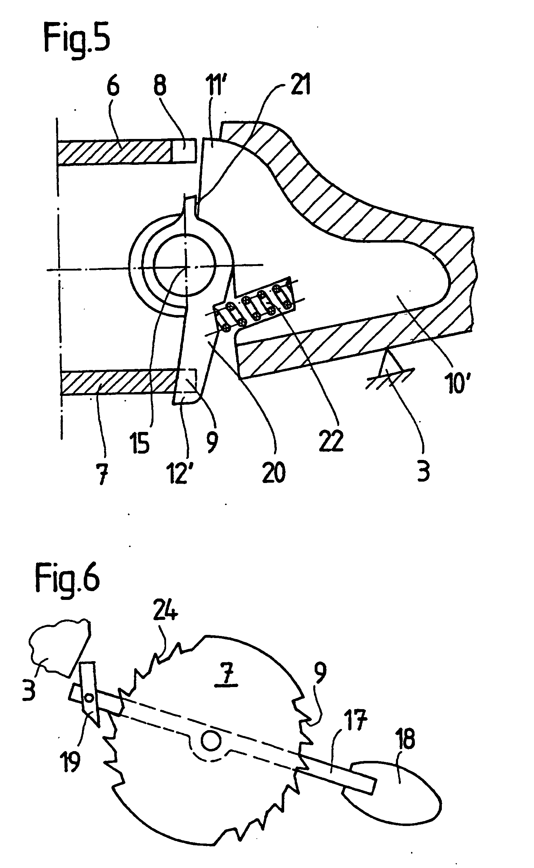

Da sich gemäß Fig. 6 die Klinke 19 mit der Verzahnung 24 nicht in Eingriff befindet, wird das Betätigungsteil 4 von der Rückstellfeder im Fahrradgetriebe zurückgedreht, so daß die im Eingriff befindliche zweite Rastnase 12 im zweiten Rastzahnsegment 9 die Rückdrehung des Betätigungsteils 4 und somit den Auslauf des Zugseils verhindert. Beim Betätigen des Freigabehebels 10 durch Berührung einer der Grifftasten 13 oder 14 wird die zweite Rastnase 12 außer Eingriff mit dem zweiten Rastzahnsegment 9 gebracht, während die erste Rastnase 11 bereits in Eingriff mit dem ersten Rastzahnsegment 8 wenigstens teilweise gekommen ist, wodurch der Betätigungsteil 4 um etwa eine halbe Gangstufe verdreht worden ist. Die Rastzahnsegmente 8 und 9 sind durch die spitze Form ihrer Zähne derart aufeinander abgestimmt, daß der wechselweise Eingriff der ersten Rastnase 11 in das erste Rastzahnsegment 8 ohne Totgang mit dem Eingriff der zweiten Rastnase 12 in das zweite Rastzahnsegment 9 erfolgen kann, wodurch bei Freigabe des Freigabehebels 10 durch Loslassen der ersten Grifftaste 13 bzw. der zweiten Grifftaste 14 das Zurückschalten von einer ersten in eine zweite Gangstufe bewirkt wird.

Gemäß Fig. 5 ist das Zusammenwirken eines Freigabehebels 10' mit der ersten Rastscheibe 6 und der zweiten Rastscheibe 7 dargestellt, wobei eine erste Rastnase 11' mit dem ersten Rastzahnsegment 8 der ersten Rastscheibe 6 zusammenwirkt, während eine zweite Rastnase 12' mit dem zweiten Rastzahnsegment 9 der zweiten Rastscheibe 7 zusammenwirkt. Aus Funktionsgründen ist die zweite Rastnase 12' auf einer Halteklinke 20 angeordnet, die über eine Feder 22, einen Anschlag 21 sowie über die gemeinsame Drehachse 15 mit dem Freigabehebel 10' verbunden ist. Während der Freigabehebel 10' am Gehäuse 3 angefedert ist und sich somit in Ruhestellung befindet, wird die Halteklinke 20 durch die Feder 22 mit der zweiten Rastnase 12' gegen das zweite Rastzahnsegment 9 angefedert, wobei die Anfederungskraft des Freigabehebels 10' gegen das Gehäuse 3 größer ist, als die Anfederungskraft der Feder 22 auf die Halteklinke 20.

Wird durch Verdrehen des Betätigungshebels 17 die Klinke 19 in Eingriff mit der Verzahnung 24 gebracht, so läßt sich mit dem Betätigungshebel 17 die zweite Rastscheibe 7 verdrehen, wodurch sich die Halteklinke 20 mit seiner zweiten Rastnase 12' über die einseitig angeschrägten Zähne des zweiten Rastzahnsegmentes 9 bewegt, ohne daß der Freigabehebel 10 aus seiner Ruhestellung herausgeführt wird. Beim Zurückführen des Betätigungshebels 17 in die Ausgangsposition mit ausgesteuerter Klinke 19 bleibt die zweite Rastscheibe 7 an der Position hängen, die der Eingriff der zweiten Rastnase 12' der Halteklinke 20 im zweiten Rastzahnsegment 9 vorgibt.

Der Vorteil der Erfindung liegt in der einfachen Betätigbarkeit des Betätigungshebels 17 sowie des Freigabehebels 10 oder 10', wobei auf die Ergonomie der Hebelausführung Rücksicht genommen wurde und wobei das Fahrradgetriebe unter allen Umständen schaltbar ist, auch wenn die Betätigungshand des Fahrers durch andere Bewegungen, beispielsweise durch Betätigung eines Bremshebels, in Anspruch genommen ist.

## Patentansprüche

1. Schalterhebelanordnung, eines Fahrradgetriebeschalters an einem Lenker (1) eines Fahrrads, umfassend:
- einen um eine gehäusefeste Mittelachse (16) drehbar angeordneten Betätigungshebel (17) zur Steuerung eines im Gehäuse (3) ebenfalls drehbar um die Mittelachse (16) angeordneten Betätigungsteils (4) mit einer Aufwickelnut (15) für ein Zugseil, wobei eine Klinke (19) mit einer Verzahnung (24) am Betätigungsteil (4) zum Aufwickeln des Zugseils zusammenwirkt, und
- einen Freigabehebel (10, 10'), der mit einer dem Betätigungsteil (4) zugeordneten, eine Rasteinrichtung aufweisenden Freigabe- und Haltemechanik zusammenwirkt,
- wobei der Betätigungshebel (17) und der Freigabehebel (10, 10') im wesentlichen unterhalb des Lenkers (1) angeordnet sind, und
- wobei der Freigabehebel (10,10') schwenkbar auf einer Drehachse (15) gelagert ist, die im wesentlichen senkrecht zu der Mittelachse (16) angeordnet ist;
**dadurch gekennzeichnet,**
**dass** die Drehachse (15) des Freigabehebels (10, 10') gehäusefest angeordnet ist und so orientiert ist, dass der Freigabehebel aus seiner Ruhestellung nach oben in seine Freigabestellung bewegbar ist, und
**dass** der Freigabehebel (10, 10') mit einem ersten und einem zweiten jeweils mit dem Betätigungsteil (4) verbundenen Rastsegment (9) der Freigabe- und Haltemechanik wechselweise zusammenwirkt.

2. Schalterhebelanordnung nach Anspruch 1,
**dadurch gekennzeichnet,**
**dass** der Freigabehebel (10, 10') an seinem gehäusefreien Ende eine erste Grifftaste (13) und eine zweite Grifftaste aufweist.

3. Schalterhebelanordnung nach Anspruch 2,
**dadurch gekennzeichnet,**
**dass** in Fahrtrichtung (25) gesehen die erste Grifftaste (13) nach rückwärts und die zweite Grifftaste (14) nach vorwärts gerichtet ist.

4. Schalterhebelanordnung nach einem der Ansprüche 2 oder 3,
**dadurch gekennzeichnet,**
**dass** die erste Grifftaste (13) vom Daumen und die zweite Grifftaste (14) vom Zeigefinger bedienbar ist, wobei die Berührungsflächen der Grifftasten (13, 14) den jeweiligen Fingern angepasst sind.

## Claims

1. Control lever arrangement of a bicycle derailleur on a bicycle handlebar (1), comprising:
- an actuating lever (17) which is arranged rotatably about a centre axis (16) fixed on the housing and is intended for controlling an actuating part (4) which is likewise arranged rotatably about the centre axis (16) in the housing (3) and has a coiling groove (15) for a traction cable, wherein a pawl (19) interacts with a toothing (24) on the actuating part (4) in order to coil up the traction cable, and
- a release lever (10, 10' which interacts with a release and holding mechanism which is assigned to the actuating part (4) and has a latching device,
- wherein the actuating lever (17) and the release lever (10, 10') are substantially arranged below the handlebar (1), and
- wherein the release lever (10, 10') is mounted pivotably on a fulcrum (15) which is arranged substantially perpendicularly to the centre axis (16),
**characterized in that** the fulcrum (15) of the release lever (10, 10') is mounted on the housing and is oriented in such a manner that the release lever can be moved from its inoperative position upwards into its release position, and **in that** the release lever (10, 10') interacts in an alternating manner with a first and second latching segment (9) of the release and holding mechanism, which latching segments are each connected to the actuating part (4).

2. Control lever arrangement according to Claim 1, **characterized in that** the release lever (10, 10') has a first gripping button (13) and a second gripping button at its end free from the housing.

3. Control lever arrangement according to Claim 2, **characterized in that** the first gripping button (13) is directed rearwards and the second gripping button (14) is directed forwards, as seen in the direction of travel (25).

4. Control lever arrangement according to either of Claims 2 and 3, **characterized in that** the first gripping button (13) can be operated by the thumb and the second gripping button (14) by the index finger, with the contact surfaces of the gripping buttons (13, 14) being matched to the particular digits.

## Revendications

1. Ensemble de levier de changement de vitesses de bicyclette, disposé sur le guidon (1) de la bicyclette et comprenant :
- un levier d'actionnement (17) disposé à rotation autour d'un axe central (16) solidaire du boîtier et qui commande une pièce d'actionnement (4) également disposée à rotation autour de l'axe central (16) dans le boîtier (3) et dotée d'une rainure d'enroulement (15) d'un câble de traction, un cliquet (19) doté d'une denture (24) prévue sur la pièce d'actionnement (4) coopérant pour enrouler le câble de traction,
- un levier de libération (10, 10') qui coopère avec un mécanisme de libération et de maintien qui présente un dispositif d'encliquetage et qui est associé à la pièce d'actionnement (4),
- le levier d'actionnement (17) et le levier de libération (10, 10') étant disposés essentiellement en dessous du guidon (1) et
- le levier de libération (10, 10') étant monté à pivotement sur un axe de rotation (15) disposé essentiellement à la perpendiculaire de l'axe central (16),
**caractérisé en ce que**
l'axe de rotation (15) du levier de libération (10, 10') est solidaire du boîtier et orienté de telle sorte que le levier de libération puisse être déplacé vers le haut depuis sa position de repos jusque dans sa position de libération et
**en ce que** le levier de libération (10, 10') coopère en alternance avec un premier et un deuxième segment d'encliquetage (9) du mécanisme de libération et de maintien qui sont reliés à la pièce d'actionnement (4).

2. Ensemble de levier de changement de vitesses selon la revendication 1, **caractérisé en ce que** le levier de libération (10, 10') présente une première touche de saisie (13) et une deuxième touche de saisie sur son extrémité située à l'extérieur du boîtier.

3. Ensemble de levier de changement de vitesses selon la revendication 2, **caractérisé en ce que** vues dans la direction de déplacement (25), la première touche de saisie (13) est orientée vers l'arrière et la deuxième touche de saisie (14) vers l'avant.

4. Ensemble de levier de changement de vitesses selon l'une des revendications 2 ou 3, **caractérisé en ce que** la première touche de saisie (13) peut être actionnée par le pouce et la deuxième touche de saisie (14) par l'index, les surfaces de contact des touches de saisie (13, 14) étant adaptées aux doigts respectifs.
